**Europäisches Patentamt**

**European Patent Office**

**Office européen des brevets**

(11) Veröffentlichungsnummer: **0 027 636**
A2

(12) # EUROPÄISCHE PATENTANMELDUNG

(21) Anmeldenummer: **80106288.6**

(22) Anmeldetag: **16.10.80**

(51) Int. Cl.³: **A 01 K 5/02**

(30) Priorität: **19.10.79 DE 2942323**

(43) Veröffentlichungstag der Anmeldung:
**29.04.81 Patentblatt 81/17**

(84) Benannte Vertragsstaaten:
**AT BE CH FR GB IT LI NL SE**

(71) Anmelder: **Gebrüder Schmeing**
**Holthausener Strasse 9**
**D-4280 Borken-Weseke(DE)**

(72) Erfinder: **Icking, Paul**
**Klemens-August-Strasse 29**
**D-4280 Borken-Weseke(DE)**

(74) Vertreter: **Habbel, Hans-Georg, Dipl.-Ing.**
**Postfach 3429 Am Kanonengraben 11**
**D-4400 Münster(DE)**

(54) **Anordnung zur Fütterung von Tieren mit Nassfutter.**

(57) Die Erfindung betrifft eine Anordnung zur Fütterung von Tieren mit Naßfutter, bei der die einzelnen Futterstellen (1, 2) dadurch beschickt werden, daß eine Anschlagseinrichtung (12; 28, 29) vom ersten bis zum letzten im Bereich jeder Futterstelle angeordneten Absperrorgan (31) verfahrbar ist und dieses Absperrorgan (31) hinsichtlich der Öffnungs- und Schließbewegung steuert.

EP 0 027 636 A2

./...

- 1 -

## Anordnung zur Fütterung von Tieren mit Naßfutter

Die Erfindung bezieht sich auf eine Anordnung zur Fütterung von Tieren mit Naßfutter, das von einer Futtermittelquelle oder einem Mischaggregat über eine Futterförderleitung den einzelnen Freßstellen in dosierbaren Mengen zuführbar ist, wobei den einzelnen Futterstellen Absperrorgane zugeordnet sind, die von einem zentral angetriebenen und längs aller Absperrorgane zu bewegenden und wenigstens eine Anschlageinrichtung aufweisenden Kraftübertragungselement aufeinanderfolgend und jeweils in einem ersten Schaltschritt zu öffnen und nach einer vorwählbaren Zeit in einem zweiten Schaltschritt zu schließen sind.

Eine Anordnung der vorstehend gekennzeichneten Art wird in der DE-OS 21 o9 48o beschrieben. Bei der bekannten Anordnung soll erreicht werden, von Futterstelle zu Futterstelle genau dosierbare, unterschiedliche Futtermengen einzustellen. Die Betätigung des oberhalb der Futterstelle angeordneten Absperrorgans sowie die Einstellung des für den gesamten Stall erforderlichen Fütterungsprogramms, d.h. die Einstellung der Öffnungsdauer der einzelnen Absperrorgane und damit die Dosierung der an jeder Futterstelle entnommenen Futtermenge erfolgt von einer zentralen Dosiereinrichtung aus.

Eine solche sogenannte "absätzige" Fütterungsweise hat den Vorteil, daß die bisher vielfach eingesetzten kostenaufwendigen und die Anlage unnötig vergrößernden Dosierbehälter vermieden werden. Die Dosierung erfolgt im Bereich jeder Futterstelle in Anpassung an die zum Zeitpunkt der Fütterung in diesem Bereich vorhandenen Tiere und kann relativ einfach geändert werden.

Für den Antrieb der im Bereich der Freßstellen angeordneten Absperrorgane ist jeweils für die Boxen eine Schubstange vorgesehen, wobei diese Schubstange für jedes Absperrorgan zwei klinkenartig ausgebildete Mitnehmer trägt, die so ausgebildet und angeordnet sind, daß sie bei einer bestimmten Vorschubrichtung der Schubstange das Absperrorgan durch Erfassen der Drehen öffnen oder schließen. Die Mitnehmer sind durch entsprechende Bemessung der Abstände voneinander so an der Schubstange angebracht, daß die Absperrorgane beim Füttern der Tiere in der Reihenfolge der einzelnen Boxen nacheinander geöffnet und geschlossen werden. Die gesamte Steuerungseinrichtung für die Absperrorgane ist also bei dieser bekannten Einrichtung außerordentlich aufwendig und insbesondere bei langen Ställen mit vielen Tieren hinsichtlich der aufzuwendenden Kräfte kaum mehr beherrschbar.

Bei der bekannten Einrichtung muß die Dosierung von einer zentralen Dosierstelle aus erfolgen, so daß eine Dosierung angesichts der Futterstelle und in Anpassung an die tatsächlich austretende Futtermenge nicht möglich ist, sondern die Dosierung erfolgt tabellarisch oder nach "akademisch" errechneten Werten, was in vielen Einsatzfällen in der praktischen Landwirtschaft nur unbefriedigend ist. Der Landwirt möchte vielmehr in Beobachtung des Futtertroges und in Anpassung an die jeweils dort vorhandenen Tiere die Futtermenge einstellen und auch schnell ändern können.

Eine ähnliche Einrichtung ist aus der DD-PS 56 663 bekannt. Auf einer umlaufenden Anschlageinrichtung sind auf dem Obertrum und auf dem Untertrum in unterschiedlichen Stellungen Anschläge angeordnet. Die einzelnen Absperrorgane werden nunmehr aufeinanderfolgend zuerst von dem Anschlag, der auf dem Untertrum angeordnet ist, beispielsweise geöffnet, und dann von einem Anschlag, der auf dem Obertrum angeordnet ist, beispielsweise geschlossen. Die Steuerungsvorrichtung für eine solche Einrichtung und der Aufwand zum Betrieb einer solchen Einrichtung ist erheblich.

Ausgehend von einer Einrichtung, wie sie in der DE-OS 21 o9 48o beschrieben wird, liegt der Erfindung die Aufgabe zugrunde, unter Vereinfachung der bekannten Anlage die Möglichkeit dafür zu schaffen, daß im Bereich jeder einzelnen Freßstelle die Dosiermenge einstellbar ist.

Diese der Erfindung zugrundeliegende Aufgabe wird dadurch gelöst, daß die Anschlageinrichtung vom ersten bis zum letzten zu betätigenden Absperrorgan bewegbar ist.

Die Erfindung arbeitet also mit einer Anschlageinrichtung, bei deren Bewegung das Absperrorgan im Bereich des Futtertroges geöffnet und geschlossen wird, und zwar aufeinanderfolgend bewegt sich diese Anschlageinrichtung von der ersten bis zur letzten Futterstelle und ist lediglich ein Auslöser, während die Einstellung der Dosiermenge unmittelbar im Bereich der Futterstelle erfolgt. Die Anschlageinrichtung kann auf im Bereich jeder Futterstelle angeordnete Steuernocken einwirken, wobei der Abstand der Steuernocken voneinander einregelbar ist, so daß die Anschlageinrichtung bewirkt, daß durch den ersten Steuernocken beispielsweise das Absperrorgan geöffnet und durch den zweiten Steuernocken das Absperrorgan geschlossen wird. Da der Abstand zwischen den beiden Steuernocken einstellbar ist, kann die Öffnungszeit des Absperrorganes einreguliert werden und damit die Menge des ausfließenden Futters bestimmt werden. Durch diese Einrichtung ist eine mechanisch arbeitende Anlage geschaffen, bei der weitestgehend elektrische Steuerungskontakte vermieden werden und die aufwendige Verkabelung der Anlage überflüssig ist.

Es kann aber auch so vorgegangen werden, daß die Anschlageinrichtung mit zwei Schaltnocken ausgerüstet ist. Beim Überfahren des Absperrorganes schaltet der erste Schaltnocken das Absperrorgan in die Offenstellung und beim Überfahren des Absperrorganes durch den zweiten Schaltnocken wird das Absperrorgan wieder geschlossen. Da, wenn es sich um eine umlaufende Anschlageinrichtung handelt, die Schaltnocken konstanten Abstand voneinander aufweisen müssen, ist es für eine individuelle Dosierung im Bereich jeder einzelnen Freßstelle erforderlich, daß die Zeitdauer der Offenstellung des Absperrorganes über eine Schaltuhr gesteuert wird. Hierbei wird gemäß der Erfindung so vorgegangen, daß die Anschlageinrichtung mit einer konstanten Geschwindigkeit umlaufend betrieben wird und daß beim Überlaufen des Absperrorganes der Schaltnocken das Absperrorgan öffnet und damit gleichzeitig eine Zeituhr in Tätigkeit setzt. Die Zeituhr bewirkt dabei, daß während ihrer Laufzeit die Anschlageinrichtung stillgesetzt ist, so daß das Überlaufen des Absperrorganes durch den zweiten Schaltnocken, der das Schließen des Absperrorganes bewirken würde, verhindert wird. Erst wenn die Zeituhr abgelaufen ist, setzt sich die Anschlageinrichtung wieder in Bewegung und schließt nunmehr das Absperrorgan und wird zur nächsten Freßstelle verfahren.

Die Steuerung der Umlaufgeschwindigkeit der Anschlageinrichtung kann auch durch ein druckabhängiges Steuerorgan am Ende der Futterförderleitung vorgenommen werden.

Vorteilhafte Ausgestaltungen der erfindungsgemäßen Einrichtung sind in den Unteransprüchen definiert.

Ausführungsbeispiele der Erfindung werden nachfolgend anhand der Zeichnungen erläutert. Die Zeichnungen

zeigen dabei in

| Fig. 1 | schaubildlich eine schematische Gesamtansicht einer Fütterungsanlage gemäß der Erfindung, in den |
| Fig. 2 bis 4 | eine erste Ausführungsform der erfindungsgemäßen Dosiervorrichtung, in den |
| Fig. 5 bis 7 | eine zweite Ausführungsform, in den |
| Fig. 8 bis 1o | eine dritte Ausführungsform und schließlich in |
| Fig.11 | in größerem Maßstab das Stellglied gemäß den Ausführungsformen 5 bis 1o zusammen mit dem zugehörigen Absperrorgan. |

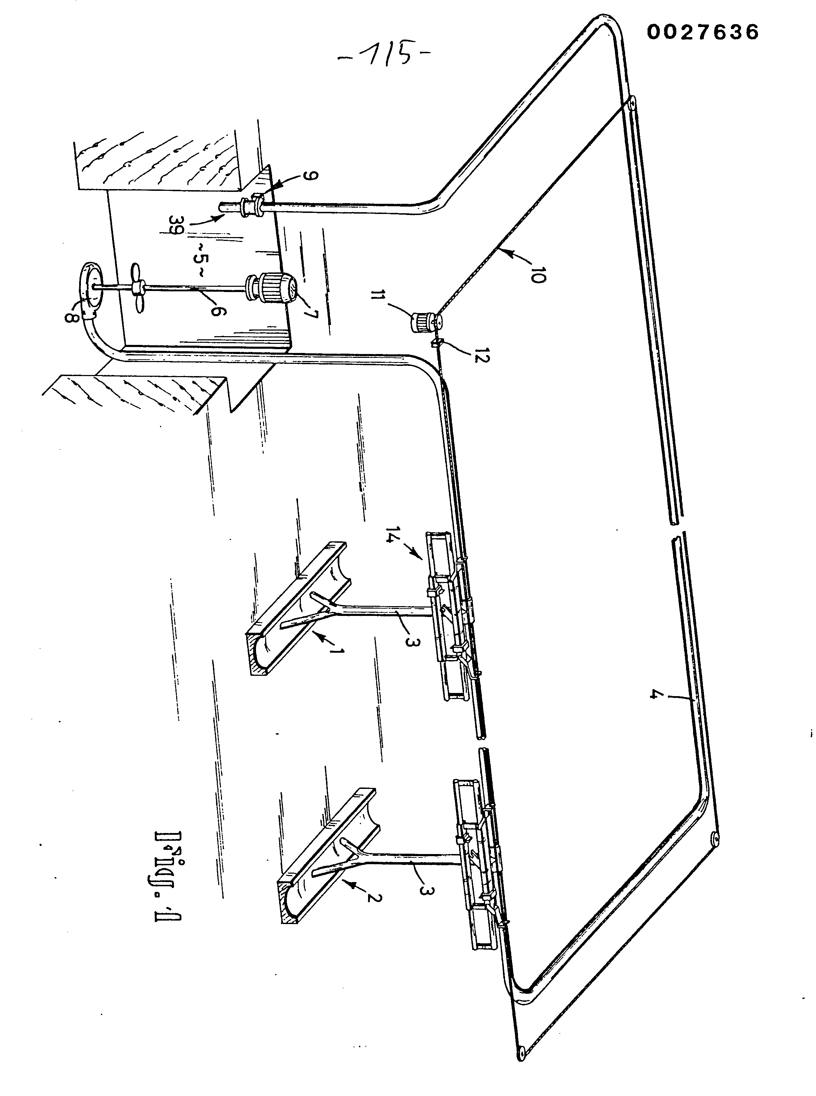

In Fig. 1 sind mit 1 und 2 zwei Freßstellen bezeichnet, die je von einem Futterabgaberohr 3 beschickt werden, wobei jedes Futterabgaberohr an eine Futterförderleitung 4 anschließt. Die Futterförderleitung beginnt in einem Vorratsbehälter 5, der ein Mischaggregat 6 aufweist, das von einem Antriebsmotor 7 angetrieben wird. Bei 8 ist eine Pumpe dargestellt und die Futterförderleitung 4 durchläuft den Stall und beschickt die einzelnen Freßplätze und mündet bei 39 in den Mischbehälter zurück. Bei 9 ist ein am Ende der Futterförderleitung 4 angeordnetes druckabhängiges Steuerorgan dargestellt.

Parallel zur Futterförderleitung 4 verläuft ein Kraftübertragungselement 1o, das über einen Antriebsmotor 11 angetrieben wird und eine Anschlageinrichtung 12 trägt, die somit oberhalb der Freßstellen verfahrbar ist.

Im Bereich jeder Freßstelle 1, 2 ist eine Dosiervorrichtung 14 vorgesehen. In Abhängigkeit der Bewegung der Anschlageinrichtung 12 wird über die Dosiereinrichtung 14 die Zeitdauer des Futterausflusses bestimmt.

Der Aufbau der Dosiervorrichtung ist deutlicher aus den Fig. 2 bis 1o ersichtlich.

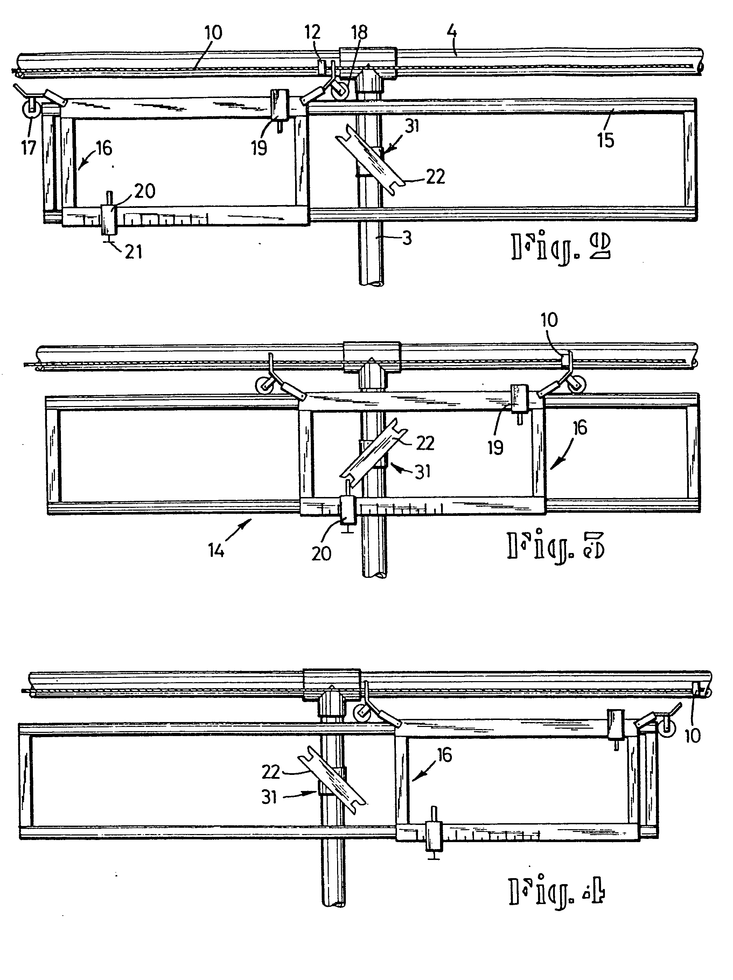

Bei der in den Fig. 2 bis 4 dargestellten Ausführungsform besteht die Dosiervorrichtung 14 aus einem rahmenartigen Gestell 15, über das ein Schlitten 16 mit Laufrollen 17 und 18 verfahrbar ist. An dem Schlitten 16 sind Steuernocken 19 und 2o angeordnet. Bei dem dargestellten Ausführungsbeispiel ist der Steuernocken 2o verstellbar, wie dies durch den federbelasteten Arretierknopf 21 angedeutet wird.

Im Futterabgaberohr 3 ist ein Absperrorgan 31 angeordnet, das über ein Stellglied 22 betätigbar ist.

Aus der Darstellung gemäß den Fig. 2 bis 4 ist erkennbar, daß, wenn die Anschlageinrichtung 12 mit dem
ersten Laufrad 18 in Kontakt kommt, der Schlitten 16
aus dem rahmenartigen Gestell 15 mitbewegt wird, so
daß der Steuernocken 19 mit dem Stellglied 22 so in
Verbindung kommt, daß das Stellglied 22 aus der in
Fig. 2 in die in Fig. 3 dargestellte Stellung gedreht
wird, wodurch gleichzeitig das eigentliche vom Stellglied 22 betätigte Absperrorgan 31 geöffnet wird. Bei
einer weiteren Bewegung des Schlittens 16 gelangt dann
der Steuernocken 2o mit dem Stellglied 22 in Kontakt
und bewegt dieses Stellglied 22 aus der in Fig. 3 in
die in Fig. 4 dargestellte Stellung, so daß das Absperrorgan 31 wieder geschlossen wird. Bei dem nächsten
Fütterungsvorgang wird das Kraftübertragungselement 1o
zurückbewegt und dann kommt die Anschlageinrichtung 12
als erstes mit dem Laufrad 17 in Kontakt und bewegt
den Schlitten 16 aus der Stellung gemäß Fig. 4 in die
Stellung gemäß Fig. 2 zurück.

Um die Zeitdauer für den gesamten Fütterungsvorgang
möglichst kurz zu halten, wird dabei die Steuerung des
Kraftübertragungselementes 1o so gestaltet, daß zu dem Zeitpunkt, wenn sich - gesteuert über die Anschlageinrichtung 12 - der Schlitten 16 bewegt und damit das Absperrorgan offen ist, das Kraftübertragungselement 1o relativ langsam bewegt wird, daß aber, wenn das Kraftübertragungselement 1o und damit die Anschlageinrichtung 12 von einer Freßstelle zur anderen bewegt wird, das Kraftübertragungselement1o relativ schnell umläuft und damit also zeitsparend betrieben werden kann. Die Steuerung dieser unterschiedlichen Geschwindigkeiten kann über das Steuerorgan 9 erfolgen oder über andere bekannte Schalteinrichtungen.

Eine abgeänderte, in ihrem Grundsatz aber in gleicher Weise ausgebildete Einrichtung ist in den Fig. 5 bis 7 dargestellt.

Es ist eine Führungsschiene 23 vorgesehen, auf der ein Schlitten 24 hin- und herverfahren werden kann. Der Schlitten 24 trägt die Steuernocken 19a und 2oa, wovon der Steuernocken 19a verstellbar ausgebildet ist.

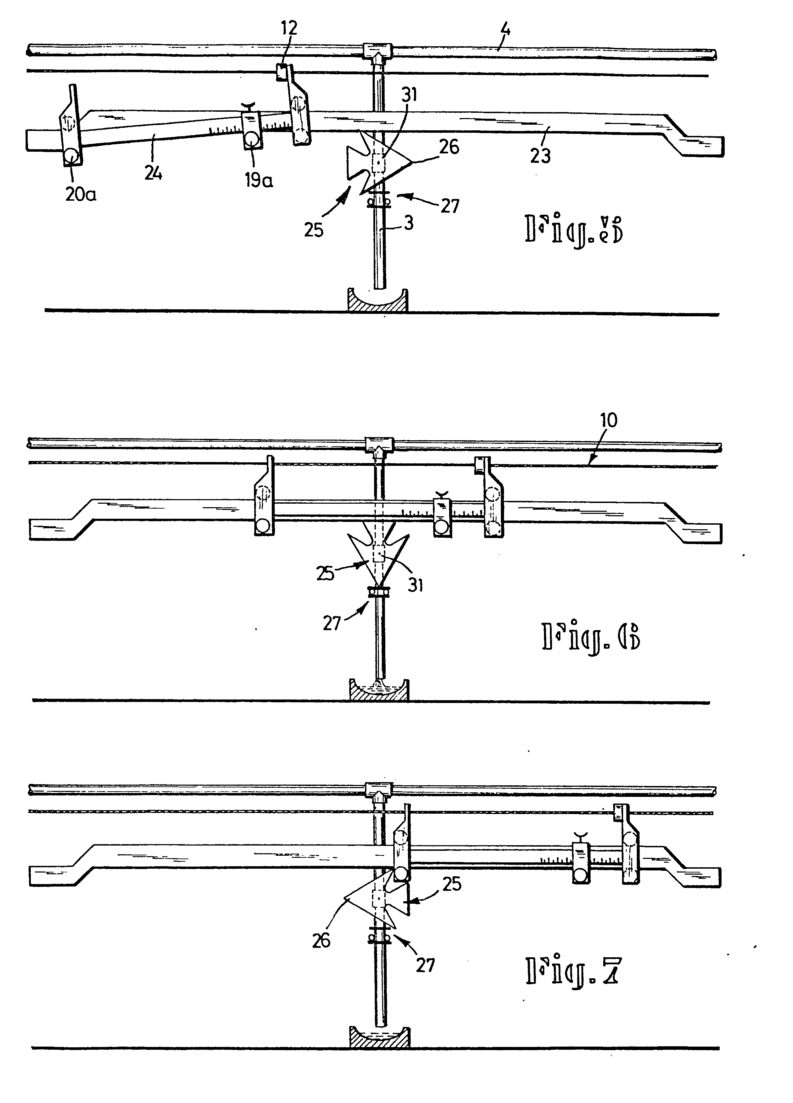

Das Stellglied zur Steuerung des Absperrorganes 31 ist mit 25 bezeichnet und wird von dem Steuernocken 19a bei Verfahren des Schlittens 24 aus der in Fig. 5 dargestellten Stellung in die in Fig. 6 dargestellte Stellung bewegt, in der das Absperrorgan 31 innerhalb des Futterabgaberohres 3 geöffnet ist und wird dann von dem Steuernocken 2oa in die in Fig. 7 dargestellte Stellung gedreht, in der das Absperrorgan 31 geschlossen ist.

Das Stellglied 25 weist dabei ein zusätzliches Betätigungsende 26 auf. Mit diesem Betätigungsende 26 steuert das Stellglied 25 einen elektrischen Schalter 27, durch den beispielsweise die Vorschubgeschwindigkeit des Kraftübertragungselementes 1o gesteuert werden kann, derart, daß während der Zeit, in der das Absperrorgan 31 geöffnet ist, die Vorschubgeschwindigkeit langsamer ist, als in der Zeit, in der das Absperrorgan geschlossen ist.

Bei der in Fig. 8 bei 1o dargestellten Einrichtung weist das Kraftübertragungselement 1o eine Anschlageinrichtung auf, die durch zwei Schaltnocken 28 und 29 gebildet ist, die in einem konstanten Abstand voneinander angeordnet sind. Außerdem ist ein elektrischer Kontakt 27a mit einem im Bereich der Freßplätze einstellbaren Schaltwerk 3o so verbunden, daß bei Betätigen eines Stellgliedes 25a das Schaltwerk 3o in Tätigkeit gesetzt und während seiner Tätigkeit der Antrieb des Kraftübertragungselementes 1o stillgesetzt wird, so daß über das Schaltwerk 3o die Menge dosiert werden kann, die durch das Futterabgaberohr 3 abgegeben werden soll.

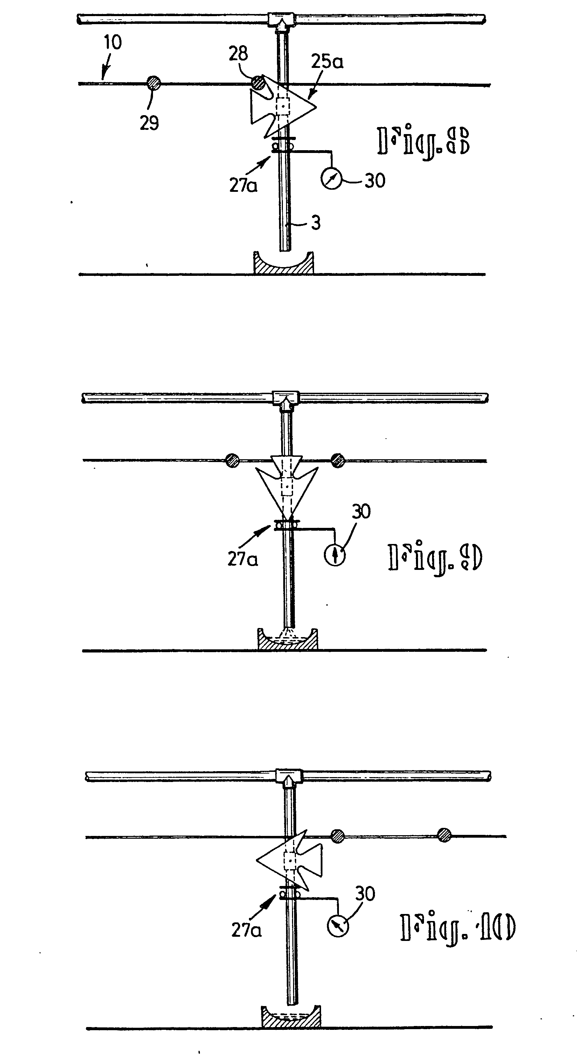

Die Offenstellung des Futterabgaberohres 3 ist in
Fig. 9 dargestellt und die geschlossene Stellung dann
in Fig. 1o.

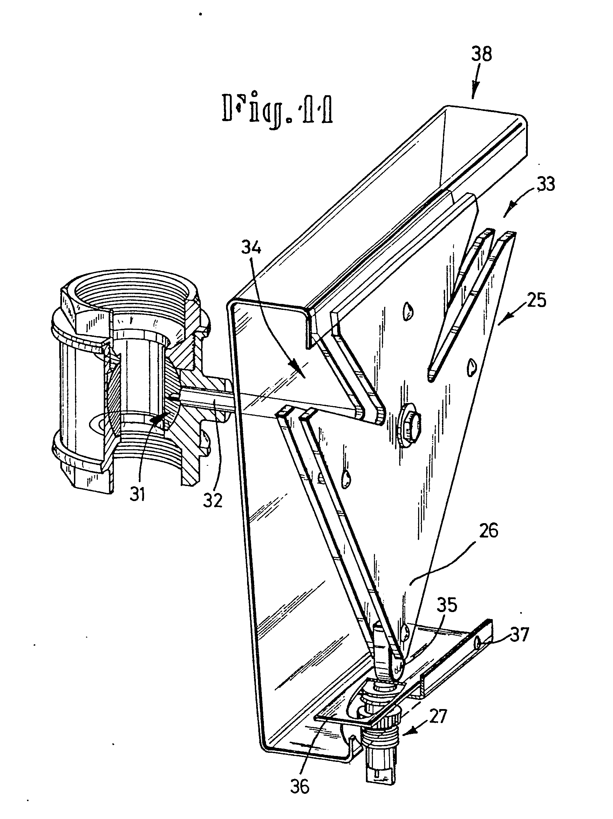

In Fig. 11 ist das Stellglied 25 in größerem Maßstab
dargestellt. Das eigentliche Absperrorgan 31 besteht
aus einem Kugelventil, das über eine Steuerwelle 32
betätigt wird, wobei die Steuerwelle 32 fest mit dem
Stellglied 25 verbunden ist. Das Stellglied 25 weist
in seinem oberen Bereich Einlaufkerben 33 und 34 auf,
die in Kontakt mit den Schaltnocken 28 und 29 bzw.
mit den Steuernocken 19 und 2o bzw. 19a und 2oa gelangen.

An dem Betätigungsende 26 des Stellgliedes 25 ist ein
Schaltrad 35 angeordnet, das mit einer Auflaufplatte
36 in Kontakt kommen kann, die drehbar bei 37 gelagert
ist, und zwar im unteren Bereich des das Stellglied 25
drehbar tragenden Gehäuses 38.

Durch die Auflaufplatte 36 wird der elektrische
Schalter 27 jedesmal dann betätigt, wenn das Stellglied 25 von der einen Extremlage, beispielsweise gemäß Fig. 5, in die andere Extremlage, beispielsweise
gemäß Fig. 7, gedreht wird, so daß in der Mittelstellung, beispielsweise gemäß Fig. 6, der Schalter
27 einen Kontakt schaltet.

- 1 -

Patentansprüche:

1. Anordnung zur Fütterung von Tieren mit Naßfutter, das von einer Futtermittelquelle oder einem Mischaggregat über eine Futterförderleitung den einzelnen Freßstellen in dosierbaren Mengen zuführbar ist, wobei den einzelnen Futterstellen Absperrorgane zugeordnet sind, die von einem zentral angetriebenen und längs aller Absperrorgane zu bewegenden und wenigstens eine Anschlageinrichtung aufweisenden Kraftübertragungselement aufeinanderfolgend und jeweils in einem ersten Schaltschritt zu öffnen und nach einer vorwählbaren Zeit in einem zweiten Schaltschritt zu schließen sind, dadurch gekennzeichnet, daß die Anschlageinrichtung (12; 28, 29) vom ersten bis zum letzten zu betätigenden Absperrorgan (31) bewegbar ist.

2. Vorrichtung nach Anspruch 1, dadurch gekennzeichnet, daß die Einstellung der Dosiermenge durch von der Anschlageinrichtung (12) im Bereich jeder Futterstelle betätigte, im individuellen Abstand voneinander angeordnete Steuernocken (19, 2o; 19a, 2oa) erfolgt (Fig.2 bis 7).

- 2 -

3. Vorrichtung nach Anspruch 1, dadurch gekennzeichnet, daß die Einstellung der Dosiermenge durch an dem Kraftübertragungselement (1o) im Abstand voneinander angeordnete, die Anschlageinrichtung bildende Schaltnocken (28, 29) erfolgt, die über ein von ihnen im Bereich der Futterstelle betätigtes zeitabhängiges Schaltwerk (3o) den Antrieb des Kraftübertragungselementes (1o) steuern (Fig. 8 bis 1o).

4. Vorrichtung nach Anspruch 1 bis 3, dadurch gekennzeichnet, daß die Anschlageinrichtung (12; 28, 29) bei dem einen Fütterungsvorgang hin- und bei dem anderen Fütterungsvorgang zurückbewegt wird.

5. Vorrichtung nach Anspruch 1 bis 4, gekennzeichnet durch einen mittels des Kraftübertragungselementes (1o) an den Futterstellen vorbeibewegbaren Anschlag (12), der im Bereich jeder Futterstelle eine Dosiervorrichtung (14) mitnehmend betätigt, die zwei in ihrem Abstand voneinander einstellbare Steuernocken (19, 2o; 19a, 2oa) aufweist, die das Öffnen und Schließen des Absperrorganes (31) bei ihrer Bewegung bewirken (Fig. 1 bis 7).

0027636

- 3 -

6. Vorrichtung wenigstens nach Anspruch 5, dadurch
gekennzeichnet, daß die Dosiervorrichtung aus
einem von der Anschlageinrichtung (12) hin- und
herbewegbaren Schlitten (16; 24) besteht, der die
Steuernocken (19, 2o; 19a, 2oa) trägt(Fig. 2
bis 7).

7. Vorrichtung nach Anspruch 5 und 6, dadurch gekennzeichnet, daß wenigstens ein Steuernocken
(2o bzw. 19a) ähnlich einem Waagebalkengewicht
verstellbar ist.

8. Vorrichtung wenigstens nach Anspruch 1, dadurch
gekennzeichnet, daß bei der Verstellung des Absperrorgans (31) ein elektrisch oder magnetisch
wirkender Schalter (27, 27a) betätigbar ist
(Fig. 11).

9. Vorrichtung wenigstens nach Anspruch 1, dadurch
gekennzeichnet, daß das Kraftübertragungselement
(1o) mit unterschiedlichen Geschwindigkeiten verfahrbar ist.

1o. Vorrichtung nach Anspruch 8 und 9, dadurch gekennzeichnet, daß die unterschiedlichen Geschwindig-

- 4 -

keiten des Kraftübertragungselementes (1o) durch
den Schalter (27, 27a) steuerbar sind.

11. Vorrichtung nach einem oder mehreren der Ansprüche 1 bis 1o, gekennzeichnet durch ein druckabhängiges Steuerorgan (9) am Ende der Futterförderleitung (4).

0027636

Fig. 1

Fig. 2

Fig. 3

Fig. 4

Fig. 5

Fig. 6

Fig. 7

- 415 -

0027636

Fig. 8

Fig. 9

Fig. 10

Fig. 11